# EUROPEAN PATENT APPLICATION

(11) **EP 3 334 086 A1**
(43) Date of publication of application: **13.06.2018**
(21) Application number: 15882411.0
(22) Date of filing: 28.09.2015
(51) Int. Cl.: H04L 9/32, H04W 12/06, H04L 29/06

(54) **ONLINE AUTHENTICATION METHOD BASED ON SMART CARD, SMART CARD AND AUTHENTICATION SERVER**

(30) Priority: 03.08.2015 CN 201510482218
(71) Applicant: ZTE Corporation, Shenzhen, Guangdong 518057 (CN)
(72) Inventor: WU, Chuanxi, Shenzhen Guangdong 518057 (CN)
(74) Representative: Brevalex
(86) International application number: PCT/CN2015/090919
(87) International publication number: WO 2016/131272

(57) **Abstract**

Disclosed are an online authentication method based on a smart card, smart card and authentication server, the method comprising: running a first application located in a user identification and authentication card; receiving, via a first channel, authentication request information directly transmitted by a current terminal user to the user identification and authentication card, or receiving authentication request information transmitted to the user identification and authentication card by the current terminal user through the forwarding of an authentication server; generating, by the first application, an authentication code according to the authentication request information, the authentication code being used to identify whether the current terminal user is a valid user; transmitting, via the first channel, the authentication code to the authentication server for authentication; and receiving, via the first channel, an authentication result fed back by the authentication server after the authentication, and determining whether the current terminal user is a valid user.

## Description

### TECHNICAL FIELD

The present disclosure relates, but is not limited, to communications, and in particular to an authentication method, an authentication card, and an authentication server.

### BACKGROUND

With development of the internet and emergence of Internets of Things, there have been repeated occurrences of various security incidents.

A number of user accounts, identity information, and financial information have been given away by serious network security incidents such as a loophole in a log of Ctrip secure payment, leakage of customer data at hotels, counterfeit online banking, a counterfeit WeChat client, a blackmailer virus, etc. In an Internet of Things, all equipment will be connected to the internet and communicate with each other. This means the coming of an era of smart homes that brings efficiency and convenience. On the other hand, a smart appliance such as a fridge, a thermostat, a home security camera, etc., that is connected to a network will be vulnerable to an attack and may malfunction or break down just like a computer. In fact, equipment in an Internet of Things such as a smart appliance is more vulnerable to attacks and damages than conventional computing equipment such as a computer, a laptop, a mobile phone, a pad, etc.

The Internet of Things is still in its infancy, and is of limited security capability with a security loophole vulnerable to hacker attacks. Although it may facilitate daily life to have everything connected to the internet, a user may risk security per se without guarantee of safety of an application (app) related to the Internet of Things.

### SUMMARY

Embodiments herein provide an authentication method, an authentication card, and an authentication server, capable of avoiding a security risk and increasing a level of security of a service provided using an app related to an Internet of Things.

A technical solution herein may be implemented as follows.

An authentication method according to an embodiment herein includes:
running an application (app) in an authentication card;
receiving, on a channel, information on an authentication request sent by User Equipment (UE);
generating, using the app according to the information on the authentication request, an authentication code for determining whether the UE is being used by an authorized user; and
sending, on the channel, the authentication code to an authentication server.
an authentication result returned by the authentication server is received on the channel after the authentication server has authenticated the authentication code. The authentication result indicates whether the UE is being used by the authorized user.

The channel may be an Open Mobile Application Programming Interface (API) (OMA) channel. The receiving, on a channel, information on an authentication request sent by UE may include: receiving the information on the authentication request sent by the UE directly.

The channel may be an Over-The-Air (OTA) channel. The receiving, on a channel, information on an authentication request sent by UE may include: receiving the information on the authentication request sent by the UE via the authentication server.

The generating, using the app according to the information on the authentication request, an authentication code may include:
acquiring information to be authenticated by analyzing the information on the authentication request,
extracting a preset authentication logic, and generating the authentication code according to the information to be authenticated and the preset authentication logic.

An authentication method according to an embodiment herein may include:
running an application (app) in an authentication card;
receiving, on a channel, information on an authentication request initiated by User Equipment (UE), the information on the authentication request being sent by the UE directly to the app;
generating, using the app according to the information on the authentication request, an authentication code for determining whether the UE is being used by an authorized user; and
sending, on the channel, the authentication code to an authentication server.
an authentication result returned by the authentication server is received on the channel after the authentication server has authenticated the authentication code. The authentication result may indicate whether the UE is being used by the authorized user.

The channel may be an Open Mobile Application Programming Interface (API) (OMA) channel.

Having received the authentication request initiated by the UE, an app managing platform may generate the information on the authentication request including a serial number of the authentication request, and return the information on the authentication request to the UE.

The authentication server may return the authentication result to the UE on the channel via the app managing platform.

An authentication method according to an embodiment herein may include:
running an application (app) in an authentication card;
receiving, on a channel, information on an authentication request initiated by User Equipment (UE), the information on the authentication request being sent by the UE to the app via an authentication server;
generating, using the app according to the information on the authentication request, an authentication code for determining whether the UE is being used by an authorized user; and
sending, on the channel, the authentication code to the authentication server.
an authentication result returned by the authentication server is received on the channel after the authentication server has authenticated the authentication code. The authentication result may indicate whether the UE is being used by the authorized user.

The channel may be an Over-The-Air (OTA) channel.

Having received the authentication request initiated by the UE, an app managing platform may generate the information on the authentication request including a serial number of the authentication request, and return the information on the authentication request to the UE.

The authentication server may return the authentication result to the UE on the channel via the app managing platform.

An authentication card according to an embodiment herein includes:
an app running unit arranged for running an application (app) in the authentication card;
a first receiving unit arranged for receiving, on a channel, information on an authentication request sent by User Equipment (UE);
a code generating unit arranged for generating, using the app according to the information on the authentication request, an authentication code for determining whether the UE is being used by an authorized user; and
a code sending unit arranged for sending, on the channel, the authentication code to an authentication server.

A second receiving unit is arranged for receiving, on the channel, an authentication result returned by the authentication server after the authentication server has authenticated the authentication code. The authentication result indicates whether the UE is being used by the authorized user.

The channel may be an Open Mobile Application Programming Interface (API) (OMA) channel. The first receiving unit may be arranged for receiving the information on the authentication request sent by the UE directly.

The channel may be an Over-The-Air (OTA) channel. The first receiving unit may be arranged for receiving the information on the authentication request sent by the UE via the authentication server.

The code generating unit may be arranged for: acquiring information to be authenticated by analyzing the information on the authentication request, extracting a preset authentication logic, and generating the authentication code according to the information to be authenticated and the preset authentication logic.

The app running unit, the first receiving unit, the code generating unit, the code sending unit, and the second receiving unit may be implemented by at least one of a Central Processing Unit (CPU), a Digital Signal Processor (DSP), a Field - Programmable Gate Array (FPGA), etc.

An authentication system according to an embodiment herein may include:
an app running unit arranged for running an application (app) in an authentication card;
a sending unit of User Equipment (UE) arranged for initiating an authentication request, and sending, on a channel, information on the authentication request directly to the app;
a code generating unit arranged for generating, using the app according to the information on the authentication request, an authentication code for determining whether the UE is being used by an authorized user;
a code sending unit arranged for sending, on the channel, the authentication code to an authentication server; and
an authentication unit and a result returning unit of the authentication server arranged for authenticating the authentication code and returning, on the channel, an authentication result indicating whether the UE is being used by the authorized user.

The channel may be an Open Mobile Application Programming Interface (API) (OMA) channel.

The system may further include an information exchanging unit of an app managing platform arranged for receiving the authentication request initiated by the UE, generating the information on the authentication request including a serial number of the authentication request, and returning the information on the authentication request to the UE.

The result returning unit of the authentication server may be arranged for returning the authentication result to the UE on the channel via the app managing platform.

The app running unit, the sending unit, the code generating unit, the code sending unit, the authentication unit, the result returning unit, the information exchanging unit may be implemented by at least one of a CPU, a DSP, an FPGA, etc.

An authentication system according to an embodiment herein may include:
an app running unit arranged for running an application (app) in an authentication card;
a sending unit of User Equipment (UE) arranged for initiating an authentication request, and sending, on a channel, information on the authentication request to the app via an authentication server;
a code generating unit arranged for generating, using the app according to the information on the authentication request, an authentication code for determining whether the UE is being used by an authorized user;
a code sending unit arranged for sending, on the channel, the authentication code to the authentication server; and
an authentication unit and a result returning unit of the authentication server arranged for authenticating the authentication code and returning, on the channel, an authentication result indicating whether the UE is being used by the authorized user.

The channel may be an Over-The-Air (OTA) channel.

The system may further including an information exchanging unit of an app managing platform arranged for receiving the authentication request initiated by the UE, generating the information on the authentication request including a serial number of the authentication request, and returning the information on the authentication request to the UE.

The result returning unit of the authentication server may be arranged for returning the authentication result to the UE on the channel via the app managing platform.

The app running unit, the sending unit, the code generating unit, the code sending unit, the authentication unit, the result returning unit, and the information exchanging unit may be implemented by at least one of a CPU, a DSP, an FPGA, etc.

With an authentication method according to an embodiment herein, an app in an authentication card is run. Information on an authentication request sent by User Equipment (UE) to the authentication card is received on a channel. an authentication code is generated using the app according to the information on the authentication request. The authentication code is for determining whether the UE is being used by an authorized user. The authentication code is sent to an authentication server on the channel. An authentication result returned by the authentication server is received on the channel after the authentication server has authenticated the authentication code. The authentication result indicates whether the UE is being used by the authorized user.

With embodiments herein, a channel is a dedicated secure channel. Information on an authentication request is sent to an app in a user identification authentication card for identification authentication. The app exchange information with an authentication server. The authentication server performs authentication. It is determined whether the UE is being used by an authorized user according to an authentication result returned by the authentication server, thereby avoiding a security risk and increasing a level of security of a service provided using an app related to an Internet of Things.

### BRIEF DESCRIPTION OF THE DRAWINGS

FIG.1 is a flowchart of an authentication method according to an embodiment herein.
FIG.2 is a diagram of a structure of an authentication card according to an embodiment herein.
FIG.3 is a diagram of a structure of an authentication system according to an embodiment herein.
FIG.4 is a flowchart of authentication via an Open Mobile Application Programming Interface (API) (OMA) channel according to an embodiment herein.
FIG.5 is a flowchart of authentication based on an Over-The-Air (OTA) channel according to an embodiment herein.

### DETAILED DESCRIPTION

A technical solution herein will be elaborated below with reference to the drawings.

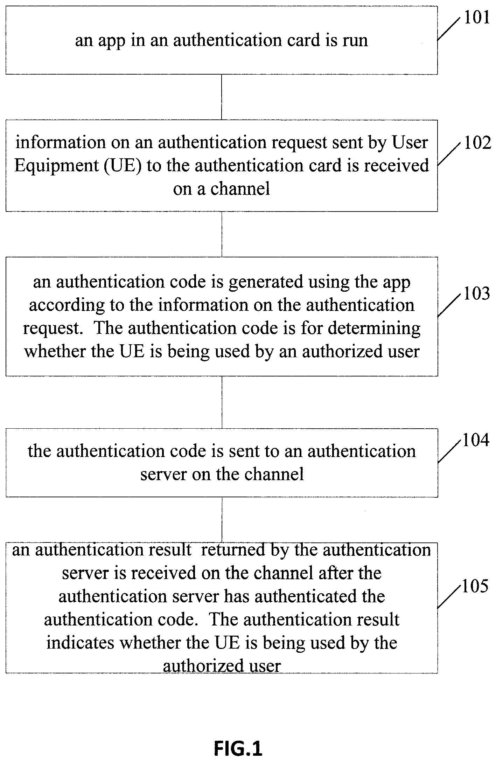

As shown in FIG.1, an authentication method according to an embodiment herein includes steps as follows.

In step 101, an app in an authentication card is run.

The authentication card may be a smart card. The app may be an authentication app.

In step 102, information on an authentication request sent by User Equipment (UE) to the authentication card is received on a channel. The UE may send the information on the authentication request to the authentication card and /or the app directly and /or via an authentication server.

The channel may be a secure channel, such as an OMA channel, an OTA channel, etc.

In step 103, an authentication code is generated using the app according to the information on the authentication request. The authentication code is for determining whether the UE is being used by an authorized user.

In step 104, the authentication code is sent to an authentication server on the channel.

In step 105, an authentication result returned by the authentication server is received on the channel after the authentication server has authenticated the authentication code. The authentication result indicates whether the UE is being used by the authorized user.

The channel may be an OMA channel. The information on the authentication request may be sent to the authentication card directly by the UE.

The channel may be an OTA channel. The information on the authentication request may be sent to the authentication card by the UE via the authentication server.

The authentication code may be generated using the app according to the information on the authentication request as follows.

Information to be authenticated may be acquired by analyzing the information on the authentication request.

A preset authentication logic may be extracted. The authentication code may be generated according to the information to be authenticated and the preset authentication logic.

An authentication method according to an embodiment herein may include steps as follows.

An app in an authentication card is run.

UE may initiate an authentication request. The UE may send, on a channel, information on the authentication request directly to the app.
an authentication code is generated using the app according to the information on the authentication request. The authentication code is for determining whether the UE is being used by an authorized user.

The authentication code is sent to an authentication server on the channel.

The authentication server may authenticate the authentication code. The authentication server may return, on the channel, an authentication result indicating whether the UE is being used by the authorized user.

The channel may be an OMA channel.

An app managing platform may receive the authentication request initiated by the UE. The app managing platform may generate the information on the authentication request. The information on the authentication request may include a serial number of the authentication request. The app managing platform may return the information on the authentication request to the UE.

The authentication server may return the authentication result to the UE on the channel via the app managing platform.

An authentication method according to an embodiment herein may include steps as follows.

An app in an authentication card is run.

UE may initiate an authentication request. The UE may send, on a channel, information on the authentication request to the app via an authentication server.
an authentication code is generated using the app according to the information on the authentication request. The authentication code is for determining whether the UE is being used by an authorized user.

The authentication code is sent to an authentication server on the channel.

The authentication server may authenticate the authentication code. The authentication server may return, on the channel, an authentication result indicating whether the UE is being used by the authorized user.

The channel may be an OTA channel.

An app managing platform may receive the authentication request initiated by the UE. The app managing platform may generate the information on the authentication request. The information on the authentication request may include a serial number of the authentication request. The app managing platform may return the information on the authentication request to the UE.

The authentication server may return the authentication result to the UE on the channel via the app managing platform.

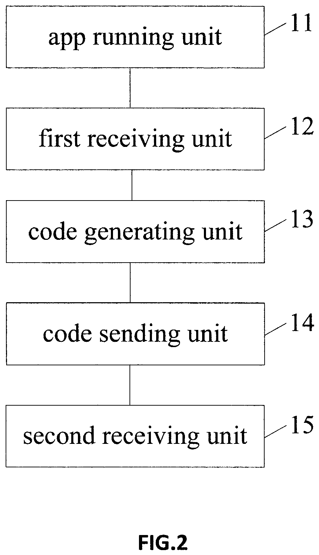

As shown in FIG.2, an authentication card according to an embodiment herein includes at least an app, an app running unit, a first receiving unit, a code generating unit, and a code sending unit.

The app running unit 11 is arranged for: running the app in the authentication card.

The first receiving unit 12 is arranged for receiving, on a channel, information on an authentication request sent by User Equipment (UE), such as directly or via an authentication server.

The code generating unit 13 is arranged for generating, using the app according to the information on the authentication request, an authentication code for determining whether the UE is being used by an authorized user.

The code sending unit 14 is arranged for sending, on the channel, the authentication code to an authentication server.

A second receiving unit 15 is arranged for receiving, on the channel, an authentication result returned by the authentication server after the authentication server has authenticated the authentication code. The authentication result may indicate whether the UE is being used by the authorized user.

The channel may be an OMA channel. The first receiving unit may be arranged for receiving the information on the authentication request sent by the UE directly.

The channel may be an OTA channel. The first receiving unit may be arranged for receiving the information on the authentication request sent by the UE via the authentication server.

The code generating unit may be arranged for: acquiring information to be authenticated by analyzing the information on the authentication request, extracting a preset authentication logic, and generating the authentication code according to the information to be authenticated and the preset authentication logic.

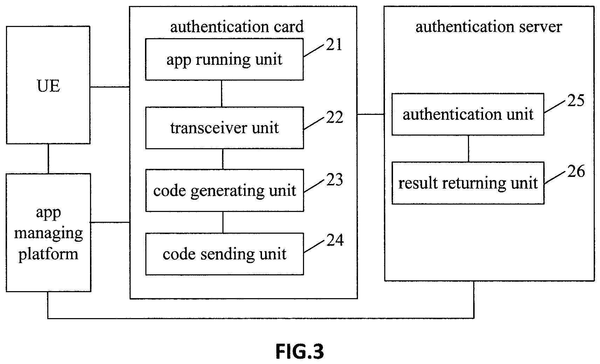

As shown in FIG.3, an authentication system according to an embodiment herein may include an app running unit, a transceiver unit, a code generating unit, a code sending unit, an authentication unit, and a result returning unit.

The app running unit 21 may be arranged for running an app in an authentication card.

The transceiver unit 22 may be arranged for receiving, on a channel, information on an authentication request initiated by UE. The information on the authentication request may be sent by the UE directly to the app.

The code generating unit 23 may be arranged for generating, using the app according to the information on the authentication request, an authentication code for determining whether the UE is being used by an authorized user.

The code sending unit 24 may be arranged for sending, on the channel, the authentication code to an authentication server.

The authentication unit 25 may be arranged for authenticating the authentication code.

The result returning unit 26 may be arranged for returning, on the channel, an authentication result indicating whether the UE is being used by the authorized user.

The app running unit 21, the transceiver unit 22, the code generating unit 23, and the code sending unit 24 may be in the authentication card. The authentication unit 25 and the result returning unit 26 may be in the authentication server. The UE may communicate respectively with the authentication card and an app managing platform. The app managing platform may communicate respectively with the authentication card and the authentication server.

The channel may be an OMA channel.

The system may further include an information exchanging unit of the app managing platform arranged for receiving the authentication request initiated by the UE, generating the information on the authentication request including a serial number of the authentication request, and returning the information on the authentication request to the UE.

The result returning unit may be arranged for returning the authentication result to the UE on the channel via the app managing platform.

As shown in FIG.3, an authentication system according to an embodiment herein may include an app running unit, a transceiver unit, a code generating unit, a code sending unit, an authentication unit, and a result returning unit.

The app running unit 21 may be arranged for running an app in an authentication card.

The transceiver unit 22 may be arranged for receiving, on a channel, information on an authentication request initiated by UE. The information on the authentication request may be sent by the UE to the app via an authentication server.

The code generating unit 23 may be arranged for generating, using the app according to the information on the authentication request, an authentication code for determining whether the UE is being used by an authorized user.

The code sending unit 24 may be arranged for sending, on the channel, the authentication code to an authentication server.

The authentication unit 25 may be arranged for authenticating the authentication code.

The result returning unit 26 may be arranged for returning, on the channel, an authentication result indicating whether the UE is being used by the authorized user.

The app running unit 21, the transceiver unit 22, the code generating unit 23, and the code sending unit 24 may be in the authentication card. The authentication unit 25 and the result returning unit 26 may be in the authentication server. The UE may communicate respectively with the authentication card and an app managing platform. The app managing platform may communicate respectively with the authentication card and the authentication server.

The channel may be an OTA channel.

The system may further include an information exchanging unit of the app managing platform arranged for receiving the authentication request initiated by the UE, generating the information on the authentication request including a serial number of the authentication request, and returning the information on the authentication request to the UE.

The result returning unit may be arranged for returning the authentication result to the UE on the channel via the app managing platform.

An embodiment herein applying to an actual scene may be illustrated below.

An authentication method here aims at avoiding a security risk and increasing a level of security of a service provided using an app related to an Internet of Things. The method may be as follows. An authentication request may be acquired by transferring information on the authentication request to an app in a smart/authentication/user card or a mobile UE responsible for authentication. The UE may transfer the authentication request to an authentication app, such as Applet, on a user card directly or via an authentication server. The authentication may be implemented online by performing identity check collaboratively by the local UE and the remote authentication server, wherein information on the identity check may have to be transferred via a network. The authentication may be implemented locally where a mode of authentication, such as no local authentication, authentication by a local personal code, authentication by fingerprint, etc., may be set flexibly by a user. A mode of local authentication set by the user may be stored but in a user card of a smart phone and not transferred elsewhere, guaranteeing security of the mode of local authentication.

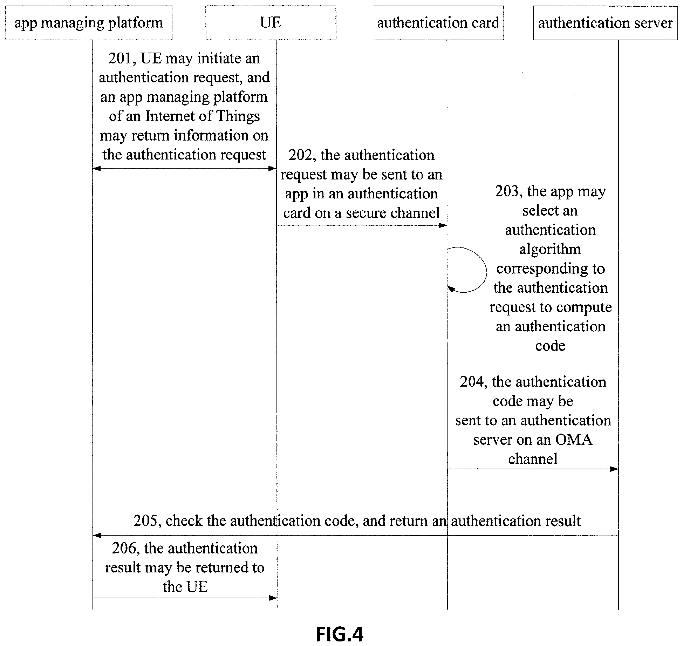

As shown in FIG.4, in online authentication, information may be sent on an OMA secure channel. The method may include steps as follows.

In step 201, UE may initiate an authentication request. An app platform may return information on the authentication request such as a serial number of the authentication request.

In step 202, the authentication request may be sent to an authentication app in a smart card on an OMA channel.

In step 203, the app may select an authentication algorithm corresponding to the authentication request to compute an authentication code.

In step 204, the authentication code may be sent to an authentication server on the OMA channel.

In step 205, the authentication server may check the authentication code. The authentication server may return an authentication result to the app (managing)platform.

In step 206, the app platform may forward the authentication result to the UE.

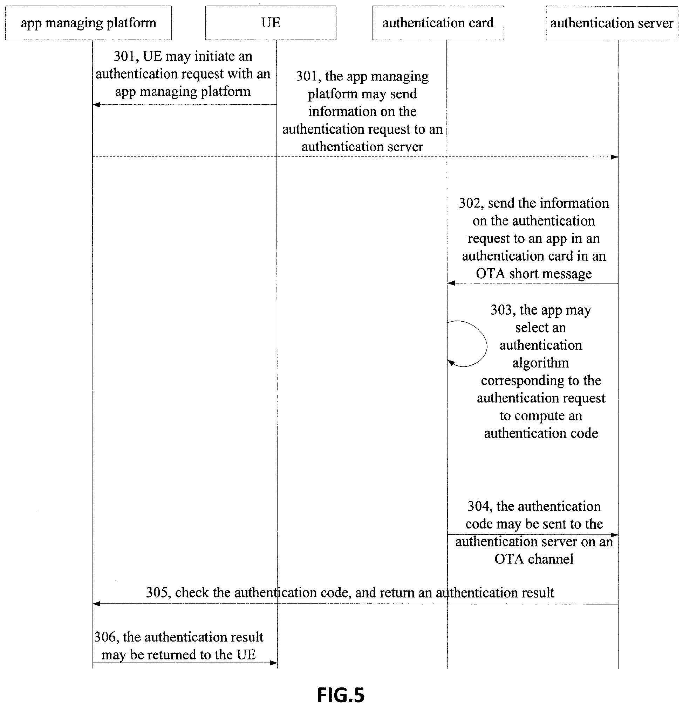

As shown in FIG.5, in online authentication, information may be sent on an OTA secure channel. The method may include steps as follows.

In step 301, UE may initiate an authentication request with an app platform. The app platform may send information on the authentication request to an authentication server.

In step 302, the authentication server may send the information on the authentication request to an authentication app in a smart card in form of an OTA short message.

In step 303, the app may select an authentication algorithm corresponding to the authentication request to compute an authentication code.

In step 304, the authentication code may be sent to the authentication server on an OTA channel.

In step 305, the authentication server may check the authentication code. The authentication server may return an authentication result to the app (managing)platform.

In step 306, the app platform may forward the authentication result to the UE.

Accordingly, an online authentication system according to an embodiment herein may include an authentication app located in a smart card, a secure channel, and an authentication server. The app may store information such as authentication information, authentication logics, etc. The app may generate an identity authentication code according to an agreed-on authentication method upon receiving an authentication request. The app may send the identity authentication code to the authentication server on the secure channel. The authentication server may serve to authenticate/check/verify the identity authentication code, authenticate authorization, and /or provide cloud capability, a security policy and /or rule, etc. The secure channel may include at least one of an OTA channel, an Open Mobile Application Programming Interface (API) (OMA) channel, etc. The OMA channel is of a high transmission rate, and may be used for transmitting massive data. An OTA short message may transmit but data of limited volume with a delay. An OTA mode may apply but to sending a small amount of information.

Accordingly, an online authentication system according to an embodiment herein may include an app managing platform, a smart card, a secure channel, and an authentication server. An authentication app may be located in the smart card. The app may store information such as authentication information, authentication logics, etc. The app may generate an identity authentication code according to an agreed-on authentication method upon receiving an authentication request. The app may send the identity authentication code to the authentication server on the secure channel. The authentication server may serve to authenticate/check/verify the identity authentication code, authenticate authorization, and /or provide cloud capability, a security policy and /or rule, etc. The secure channel may include at least one of an Over-the-Air Technology (OTA) channel, an OMA channel, etc. The OMA channel is of a high transmission rate, and may be used for transmitting massive data. An OTA short message may transmit but data of limited volume with a delay. An OTA mode may apply but to sending a small amount of information.

The authentication app may be pre-installed or downloaded to the smart card OTA channel. Information synchronization, such as session key synchronization, Public Key Infrastructure (PKI) key pair generation, etc., may be completed. The authentication app in the smart card may be bound with an app related to the Internet of Things. Service authentication may then start.

Advantages of embodiments herein are as follows.
(1) A smart /authentication card herein is secure. An existing Universal Integrated Circuit Card (UICC) is highly secure with a strict mechanism to control secure access. Any app has to access a smart card according to a rule of secure access. Therefore, information and an algorithm in the card are provided with the highest level of security known to date.
(2) A channel herein is secure. An OMA secure channel may be accessed only by an app meeting a security rule. An OTA short message is sent to the smart card by a server. Sent content is encrypted using a session key and cannot be intercepted by an app at UE. Authorization for accessing either channel is under strict control by an operator, guaranteeing security in transmission on such a channel.
(3) An algorithm herein is flexible yet secure. an authentication code is generated by an advanced algorithm known to date using dynamic information and unique static card information stored in the smart card. Alternatively, a PKI-based asymmetric key algorithm is used. An algorithm corresponding to a level of security required by an app related to the Internet of Things may be used flexibly as needed.

When implemented in form of a software functional module and sold or used as an independent product, an integrated module herein may also be stored in a transitory or non-transitory computer-readable storage medium. Based on such an understanding, the essential part or a part contributing to prior art of the technical solution of an embodiment herein may appear in form of a software product, which software product is stored in storage media, and includes a number of instructions for allowing computer equipment (such as a personal computer, a server, network equipment, and/or the like) to execute all or part of the methods in various embodiments herein. The storage media include various media that can store program codes, such as a U disk, a mobile hard disk, a Read Only Memory (ROM), a Random Access Memory (RAM), a magnetic disk, a CD, and/or the like. Thus, an embodiment herein is not limited to any specific combination of hardware and software.

Accordingly, an embodiment herein further provides a computer-readable storage medium storing a computer program for executing an online authentication method based on a smart card according to an embodiment herein.

What described are merely embodiments herein, and are not intended to limit the scope of the present disclosure.

### Industrial Applicability

With embodiments herein, a channel is a dedicated secure channel. Information on an authentication request is sent to an app in a user identification authentication card for identification authentication. The app exchange information with an authentication server. The authentication server performs authentication. It is determined whether the UE is being used by an authorized user according to an authentication result returned by the authentication server, thereby avoiding a security risk and increasing a level of security of a service provided using an app related to an Internet of Things.

## Claims

1. An authentication method, comprising:
running an application (app) in an authentication card;
receiving, on a channel, information on an authentication request sent by User Equipment (UE);
generating, using the app according to the information on the authentication request, an authentication code for determining whether the UE is being used by an authorized user; and
sending, on the channel, the authentication code to an authentication server,
wherein an authentication result returned by the authentication server is received on the channel after the authentication server has authenticated the authentication code, the authentication result indicating whether the UE is being used by the authorized user.

2. The method according to claim 1, wherein the channel is an Open Mobile Application Programming Interface (API) (OMA) channel, wherein the receiving, on a channel, information on an authentication request sent by UE comprises: receiving the information on the authentication request sent by the UE directly.

3. The method according to claim 1, wherein the channel is an Over-The-Air (OTA) channel, wherein the receiving, on a channel, information on an authentication request sent by UE comprises: receiving the information on the authentication request sent by the UE via the authentication server.

4. The method according to claim 2 or 3, wherein the generating, using the app according to the information on the authentication request, an authentication code comprises:
acquiring information to be authenticated by analyzing the information on the authentication request,
extracting a preset authentication logic, and
generating the authentication code according to the information to be authenticated and the preset authentication logic.

5. An authentication method, comprising:
running an application (app) in an authentication card;
receiving, on a channel, information on an authentication request initiated by User Equipment (UE), the information on the authentication request being sent by the UE directly to the app;
generating, using the app according to the information on the authentication request, an authentication code for determining whether the UE is being used by an authorized user; and
sending, on the channel, the authentication code to an authentication server,
wherein an authentication result returned by the authentication server is received on the channel after the authentication server has authenticated the authentication code, the authentication result indicating whether the UE is being used by the authorized user.

6. The method according to claim 5, wherein the channel is an Open Mobile Application Programming Interface (API) (OMA) channel.

7. The method according to claim 5 or 6,
wherein having received the authentication request initiated by the UE, an app managing platform generates the information on the authentication request comprising a serial number of the authentication request, and returns the information on the authentication request to the UE.

8. The method according to claim 7,
wherein the authentication server returns the authentication result to the UE on the channel via the app managing platform.

9. An authentication method, comprising:
running an application (app) in an authentication card;
receiving, on a channel, information on an authentication request initiated by User Equipment (UE), the information on the authentication request being sent by the UE to the app via an authentication server;
generating, using the app according to the information on the authentication request, an authentication code for determining whether the UE is being used by an authorized user;
sending, on the channel, the authentication code to the authentication server; and
wherein an authentication result returned by the authentication server is received on the channel after the authentication server has authenticated the authentication code, the authentication result indicating whether the UE is being used by the authorized user.

10. The method according to claim 9, wherein the channel is an Over-The-Air (OTA) channel.

11. The method according to claim 9 or 10,
wherein having received the authentication request initiated by the UE, an app managing platform generates the information on the authentication request comprising a serial number of the authentication request, and returns the information on the authentication request to the UE.

12. The method according to claim 11,
wherein the authentication server returns the authentication result to the UE on the channel via the app managing platform.

13. An authentication card, comprising:
an app running unit arranged for running an application (app) in the authentication card;
a first receiving unit arranged for receiving, on a channel, information on an authentication request sent by User Equipment (UE);
a code generating unit arranged for generating, using the app according to the information on the authentication request, an authentication code for determining whether the UE is being used by an authorized user; and
a code sending unit arranged for sending, on the channel, the authentication code to an authentication server,
wherein a second receiving unit is arranged for receiving, on the channel, an authentication result returned by the authentication server after the authentication server has authenticated the authentication code, the authentication result indicating whether the UE is being used by the authorized user.

14. The authentication card according to claim 13, wherein the channel is an Open Mobile Application Programming Interface (API) (OMA) channel, wherein the first receiving unit is arranged for receiving the information on the authentication request sent by the UE directly.

15. The authentication card according to claim 13, wherein the channel is an Over-The-Air (OTA) channel, wherein the first receiving unit is arranged for receiving the information on the authentication request sent by the UE via the authentication server.

16. The authentication card according to claim 13 or 14, wherein the code generating unit is arranged for:
acquiring information to be authenticated by analyzing the information on the authentication request,
extracting a preset authentication logic, and
generating the authentication code according to the information to be authenticated and the preset authentication logic.

17. An authentication system, comprising:
an app running unit arranged for running an application (app) in an authentication card;
User Equipment (UE) arranged for initiating an authentication request, and sending, on a channel, information on the authentication request directly to the app;
a code generating unit arranged for generating, using the app according to the information on the authentication request, an authentication code for determining whether the UE is being used by an authorized user;
a code sending unit arranged for sending, on the channel, the authentication code to an authentication server; and
the authentication server arranged for authenticating the authentication code and returning, on the channel, an authentication result indicating whether the UE is being used by the authorized user.

18. The system according to claim 17, wherein the channel is an Open Mobile Application Programming Interface (API) (OMA) channel.

19. The system according to claim 17 or 18, further comprising an app managing platform arranged for receiving the authentication request initiated by the UE, generating the information on the authentication request comprising a serial number of the authentication request, and returning the information on the authentication request to the UE.

20. The system according to claim 19, wherein the authentication server is arranged for returning the authentication result to the UE on the channel via the app managing platform.

21. An authentication system, comprising:
an app running unit arranged for running an application (app) in an authentication card;
User Equipment (UE) arranged for initiating an authentication request, and sending, on a channel, information on the authentication request to the app via an authentication server;
a code generating unit arranged for generating, using the app according to the information on the authentication request, an authentication code for determining whether the UE is being used by an authorized user;
a code sending unit arranged for sending, on the channel, the authentication code to the authentication server; and
the authentication server arranged for authenticating the authentication code and returning, on the channel, an authentication result indicating whether the UE is being used by the authorized user.

22. The system according to claim 21, wherein the channel is an Over-The-Air (OTA) channel.

23. The system according to claim 21 or 22, further comprising an app managing platform arranged for receiving the authentication request initiated by the UE, generating the information on the authentication request comprising a serial number of the authentication request, and returning the information on the authentication request to the UE.

24. The system according to claim 22, wherein the authentication server is arranged for returning the authentication result to the UE on the channel via the app managing platform.
